(19) Europäisches Patentamt

European Patent Office

Office européen des brevets

(11) **EP 4 184 119 B1**

(12) **EUROPEAN PATENT SPECIFICATION**

(45) Date of publication and mention of the grant of the patent:
**25.03.2026  Bulletin 2026/13**

(21) Application number: **21849359.1**

(22) Date of filing: **29.04.2021**

(51) International Patent Classification (IPC):
*G01C 21/34* ^(2006.01)    *B60W 60/00* ^(2020.01)
*G01C 21/00* ^(2006.01)    *G01C 21/36* ^(2006.01)
*G08G 1/01* ^(2006.01)    *G06V 10/82* ^(2022.01)
*G06V 20/58* ^(2022.01)    *G06V 20/56* ^(2022.01)

(52) Cooperative Patent Classification (CPC):
**G01C 21/3461; B60W 60/0015; G01C 21/3658;
G01C 21/3822; G06V 10/82; G06V 20/58;
G06V 20/588; G08G 1/0112; G08G 1/0129;
G08G 1/0141; G08G 1/0145**

(86) International application number:
**PCT/CN2021/091159**

(87) International publication number:
**WO 2022/021982 (03.02.2022 Gazette 2022/05)**

(54) **TRAVELABLE REGION DETERMINATION METHOD, INTELLIGENT DRIVING SYSTEM AND INTELLIGENT VEHICLE**

VERFAHREN ZUR BESTIMMUNG DES FAHRBAREN BEREICHS, INTELLIGENTES ANTRIEBSSYSTEM UND INTELLIGENTES FAHRZEUG

PROCÉDÉ DE DÉTERMINATION DE RÉGION POUVANT ÊTRE PARCOURUE, SYSTÈME DE CONDUITE INTELLIGENT ET VÉHICULE INTELLIGENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.07.2020  CN 202010726575**

(43) Date of publication of application:
**24.05.2023  Bulletin 2023/21**

(73) Proprietor: **Shenzhen Yinwang Intelligent
Technologies Co., Ltd.
Shenzhen, Guangdong 518129 (CN)**

(72) Inventor: **GUO, Jianting
Shenzhen, Guangdong 518129 (CN)**

(74) Representative: **Maiwald GmbH
Engineering
Elisenhof
Elisenstrasse 3
80335 München (DE)**

(56) References cited:
WO-A1-2018/063245    CN-A- 103 748 431
CN-A- 107 622 684    CN-A- 109 532 379
CN-A- 110 633 597    CN-A- 112 444 258
US-A1- 2016 368 505    US-A1- 2018 188 743
US-A1- 2018 284 772

## Description

### TECHNICAL FIELD

This application relates to the field of intelligent vehicles, and in particular, to a method for determining a drivable area for intelligent driving, an intelligent driving system, and an intelligent vehicle.

### BACKGROUND

With the development of economy, a quantity of automobiles increases rapidly, and an automotive technology is integrated with a computer technology in more cases. In recent years, intelligent vehicles have become a new development trend of vehicles, and an increasing quantity of automobiles use a driver assistance (driver assistance), automated driving (automated driving), or intelligent network driving (intelligent network driving) system. In a driving process, such a system intelligently detects an obstacle and senses an ambient environment by using a sensing device such as a vehicle-mounted image collection device and an on-board sensor, and uses an on-board computing platform (for example, a mobile data center (mobile data center, MDC)) to determine a driving path of a vehicle and control a driving status of the vehicle.

The automated driving technology has a wide application prospect and is of great research significance. Automated driving is used to autonomously perform driving operations by using sensing devices to detect roads and obstacles, so that driving safety can be improved, traffic accidents can be reduced, and human and economic losses can be reduced. In addition, the automated driving can work with an intelligent transportation system to allocate road resources more properly and relieve urban traffic congestion. Currently, the automated driving technology is still in a research and test phase, and drivable area detection is an indispensable part of advanced driver assistance and automated driving. The WO 2018063245 A1 refers to an autonomous vehicle localization. The US 2018/188743A1 refers to a route generation using high definition maps for autonomous vehicles. The US 2016/368505 A1 refers to a system and a method for adjusting a road boundary.

A drivable area detection method is a method for determining a drivable area based on an input of a current sensing device. In the conventional technology, a road surface is determined in real time by using machine learning or the like, to identify a drivable area. However, for automated driving based on a current drivable area detection technology, planning control of a drivable route is performed only based on a detected current drivable area. Consequently, accuracy of route planning is limited.

### SUMMARY

Embodiments of this application provide a method for determining a drivable area applied to intelligent driving, an intelligent driving system, and an intelligent vehicle, to resolve a problem that existing drivable area determining is instant determining, with limited accuracy and no self-learning. The invention is set out in the appended set of claims.

According to a first aspect, an embodiment of this application provides a method for determining a drivable area applied to intelligent driving to determine a drivable path for a vehicle, including the following steps:

an intelligent driving system obtains environment information around a location of a vehicle, and determines a current drivable area based on the environment information;
the intelligent driving system queries a historical drivable area library based on the location of the vehicle, to obtain information about a corresponding historical drivable area; and
the intelligent driving system superposes the current drivable area and the historical drivable area, to obtain a drivable area at this time.

In this embodiment of this application, a determining result of a previous drivable area is persisted to the historical drivable area library, and is applied to a subsequent drivable area determining process, so that the intelligent driving system can select a driving path at this time from the current drivable area, to output the drivable area at this time including an optimal path.

The intelligent driving system determines whether the drivable area obtained through superposition includes a drivable lane that meets a first length, and if the drivable area obtained through superposition includes the drivable lane that meets the first length, uses the drivable lane that meets the first length as the drivable area at this time. When the drivable area obtained through superposition does not include the drivable lane that meets the first length, the current drivable area is used as the drivable area at this time.

In this embodiment of this application, the historical drivable area at the location of the vehicle is used as a factor for determining the drivable area at this time. In a possible implementation, the drivable area obtained through superposition is used as the drivable area at this time for output only when there is the drivable lane that meets the first length in the drivable area obtained through superposition. In this case, the drivable lane that meets the first length may be used as an optimal path, so that accuracy of the output drivable area at this time is higher.

In a possible implementation, in this embodiment of this application, that the current drivable area and the historical drivable area are superimposed to obtain the drivable area at this time may be as follows.

When a drivable area obtained by superimposing the current drivable area and previous k historical drivable areas includes the drivable lane that meets the first length, the drivable area obtained through superimposition is used as the drivable area at this time.

When a drivable area obtained by superimposing the current drivable area and previous k historical drivable area does not include the drivable lane that meets the first length, it is determined whether a drivable area obtained by superimposing the current drivable area and a previous historical drivable area includes the drivable lane that meets the first length; and if the drivable area obtained by superimposing the current drivable area and the previous historical drivable area includes the drivable lane that meets the first length, the drivable area obtained by superimposing the current drivable area and the previous historical drivable area is used as the drivable area at this time.

k is a positive integer greater than or equal to 2.

In the foregoing two methods for superimposing the drivable areas, preferably, the current drivable area and the previous k historical drivable areas may be superimposed. When there is the drivable lane that meets the first length after the current drivable area and the previous k historical drivable areas are superposed, it indicates that before superposition, the previous k historical drivable areas include an optimal path, and the path is possibly a preferred path in the previous k driving processes. Sub-preferably, when there is no drivable lane that meets the first length after the current drivable area and the previous k historical drivable areas are superposed, the current drivable area and the previous historical drivable area may be superposed. If there is the drivable lane that meets the first length in the superimposed area, it indicates that the drivable lane that meets the first length is a drivable lane in both the current driving process and the previous driving process.

In a possible implementation, when the current drivable area includes the drivable lane that meets the first length, the current drivable area is updated to the historical drivable area library.

In another possible implementation, in this embodiment of this application, the historical drivable area library may be updated by using the drivable area obtained through superposition. Examples are as follows.

When the drivable area obtained by superimposing the current drivable area and previous k historical drivable areas includes the drivable lane that meets the first length, the drivable area obtained through superimposition is output as the drivable area at this time, and the drivable area is recorded in the historical drivable area library.

When the drivable area obtained by superimposing the current drivable area and the previous k historical drivable area does not include the drivable lane that meets the first length, and when the drivable area obtained by superimposing the current drivable area and the previous historical drivable area includes the drivable lane that meets the first length, the drivable area obtained by superimposing the current drivable area and the previous historical drivable area is output as the drivable area at this time, and the drivable area is recorded in the historical drivable area library.

When none of the drivable areas obtained through superposition includes the drivable lane that meets the first length, and when the current drivable area includes the drivable lane that meets the first length, the current drivable area is output as the drivable area at this time, and is recorded in the historical drivable area library.

The intelligent driving system may further delete, when there are more than k records corresponding to a piece of positioning data in the historical drivable area library, a record that has a longest storage time.

The foregoing update method improves time validity of data recorded in the historical drivable area library, and avoids a case in which outdated data is stored in the historical drivable area library, which affects a subsequent determining result of the drivable area.

In an example, the first length indicates a sensing range of the intelligent driving system, and the drivable lane that meets the first length indicates that a lane in the sensing range of the intelligent driving system is in a drivable area.

In a possible implementation, the historical drivable area library records information about a historical drivable area, including a historical drivable area record, positioning data, and a road feature point. The intelligent driving system stores the information about the historical drivable area by using a second length as a granularity. The second length may be an empirical value, for example, 1 meter or 10 meters. If the second length is approximately small, more historical drivable area information needs to be stored, and more storage space is occupied.

In an example, the information about the historical drivable area further includes a tag number. Each historical drivable area record corresponds to one tag number, and the tag number corresponds to the positioning data. The intelligent driving system may query the tag number of the positioning data based on the positioning data of the location of the vehicle, and output information about all historical drivable areas that match the tag number.

It may be understood that the output historical drivable area is greater than or equal to the sensing range of the intelligent driving system, that is, the output historical drivable area covers a sensing range in a vehicle moving direction. In this case, when the second length is less than a sensing range radius of the intelligent driving system, the intelligent driving system obtains a historical drivable area whose length is greater than or equal to the sensing range in the vehicle moving direction at the location of the vehicle, that is, obtains information about historical drivable areas corresponding to a plurality of tag numbers in the moving direction, so that a range represented by a set of historical drivable areas corresponding to the plurality of tag numbers is greater than or equal to the sensing range of the vehicle moving direction.

In a possible implementation, after the querying a historical drivable area library to obtain information about a corresponding historical drivable area, the method further includes: The intelligent driving system registers a current drivable area and a historical drivable area based on a road feature point of the location of the vehicle, so that a road feature point of the current drivable area overlaps, on a map, the road feature point included in the information about the historical drivable area that is obtained by querying.

According to a second aspect, an embodiment of this application provides an intelligent driving system configured to determine a drivable path for a vehicle, including:

a detection module, configured to: obtain environment information around a location of a vehicle, and determine a current drivable area based on the environment information;

a query module, configured to query a historical drivable area library based on the location of the vehicle, to obtain information about a corresponding historical drivable area; and

a fusion module, configured to superimpose the current drivable area and the historical drivable area, to obtain a drivable area at this time.

In a possible implementation, the fusion module is specifically configured to: determine whether the drivable area obtained through superposition includes a drivable lane that meets a first length, and if the drivable area obtained through superposition includes the drivable lane that meets the first length, use the drivable lane that meets the first length as the drivable area at this time.

The fusion module is specifically configured to: when the drivable area obtained through superposition does not include the drivable lane that meets the first length, use the current drivable area as the drivable area at this time.

The fusion module is specifically configured to: when a drivable area obtained by superimposing the current drivable area and previous k historical drivable areas includes the drivable lane that meets the first length, use the drivable area obtained through superimposition as the drivable area at this time.

The fusion module is specifically configured to: when a drivable area obtained by superimposing the current drivable area and previous k historical drivable area does not include the drivable lane that meets the first length, determine whether a drivable area obtained by superimposing the current drivable area and a previous historical drivable area includes the drivable lane that meets the first length; and if the drivable area obtained by superimposing the current drivable area and the previous historical drivable area includes the drivable lane that meets the first length, use the drivable area obtained by superimposing the current drivable area and the previous historical drivable area as the drivable area at this time, where k is a positive integer greater than or equal to 2.

The fusion module is specifically configured to: when the current drivable area includes the drivable lane that meets the first length, update the current drivable area to the historical drivable area library.

The information about the historical drivable area includes a historical drivable area record, positioning data, and a road feature point.

The fusion module is specifically configured to: register the current drivable area and the historical drivable area based on a road feature point of the location of the vehicle, so that the road feature point of the current drivable area overlaps, on a map, the road feature point included in the information about the historical drivable area that is obtained by querying.

According to a third aspect, an embodiment of this application further provides a vehicle, including a processor, a memory, and a sensing device.

The memory is configured to store a historical drivable area library.

The sensing device is configured to obtain environment information around a location of a vehicle.

The processor is configured to execute instructions to implement the method described in any specific implementation of the first aspect.

In this application, based on implementations according to the foregoing aspects, the implementations may be further combined to provide more implementations.

Embodiments of this application disclose a method for determining a drivable area applied to intelligent driving. A current drivable area is determined based on environment information around a location of a vehicle, a historical drivable area library is queried based on the location of the vehicle, to obtain information about a corresponding historical drivable area, and the current drivable area is superimposed with the historical drivable area, to obtain a drivable area at this time. Embodiments of this application provide a method for determining a drivable area at this time based on information about a historical drivable area, to output an optimal drivable area by fusing the stored information about the historical drivable area with a current drivable area. Further, in embodiments of this application, fusion accuracy may be improved with reference to road feature point detection. In embodiments of this application, the historical drivable area may be further updated, and a road condition change is updated to a historical record in a timely manner. Further, in embodiments of this application, a historical information aging mechanism may be further set. After information about a formable area at this time is updated to the historical drivable area library, the at least one piece of old data is discarded, so that an algorithm can eliminate impact of outdated information and avoid interference from some abnormal values.

## BRIEF DESCRIPTION OF DRAWINGS

FIG. 1 is a schematic diagram of a hardware structure of an in-vehicle computing system according to an embodiment of this application;

FIG. 2 is a schematic diagram of a logical structure of an intelligent driving system according to an embodiment of this application;

FIG. 3 is a schematic diagram of a time sequence procedure for fusion determining of a drivable area according to an embodiment of this application;

FIG. 4 is a schematic diagram of fusion of a current drivable area and a historical drivable area according to an embodiment of this application;

FIG. 5 is a schematic diagram of a sensing range of an intelligent driving system according to an embodiment of this application;

FIG. 6 is a schematic flowchart of a method for determining a drivable area applied to intelligent driving according to an embodiment of this application;

FIG. 7 is another schematic flowchart of a method for determining a drivable area applied to intelligent driving according to an embodiment of this application; and

FIG. 8 is a schematic diagram of an apparatus for determining a drivable area according to an embodiment of this application.

## DESCRIPTION OF EMBODIMENTS

The following describes in detail embodiments of this application with reference to the accompanying drawings.

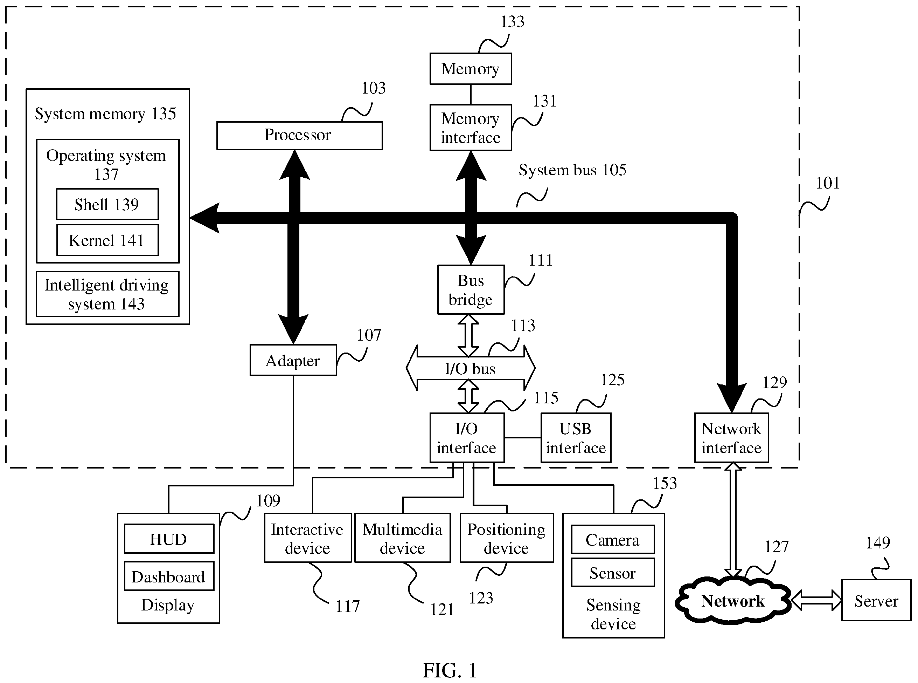

Embodiments of this application are applied to the field of intelligent vehicles. FIG. 1 is a schematic diagram of a hardware structure of an in-vehicle computing system applicable to an embodiment of this application. The in-vehicle computing system may include an in-vehicle processing system 101, a device/component/network directly or indirectly connected to the in-vehicle processing system 101, and the like.

Refer to FIG. 1. The in-vehicle processing system 101 includes a processor 103 and a system memory 135. The processor 103 is connected to another component/interface on the in-vehicle processing system 101 through a system bus 105. The processor 103 may be one or more processors, and each processor may include one or more processor cores. The in-vehicle processing system 101 is connected to another in-vehicle component, for example, a display 109, an interactive device 117, a multimedia device 121, a positioning device 123, and a sensing device 153 (a camera and various sensors) through various interfaces (for example, an adapter 107, an I/O interface 115, and a USB interface 125). The in-vehicle processing system 101 is connected to an external network 127 through a network interface 129, and exchanges information with a server 149 by using the external network 127. The network interface 129 may send and/or receive a communication signal.

In the in-vehicle processing system 101, the system bus 105 is coupled to an input/output (input/output, I/O) bus 113 through a bus bridge 111. The I/O interface 115 communicates with a plurality of I/O devices, for example, the interactive device 117 (such as a keyboard, a mouse, or a touchscreen), the multimedia device 121 (such as a compact disc read-only memory (compact disc read-only memory, CD-ROM), a multimedia interface, the positioning device 123, the universal serial bus (universal serial bus, USB) interface 125, and the sensing device 153 (the camera may capture static and dynamic digital video images).

The interactive device 117 is configured to implement message interaction between an intelligent vehicle and a driver. The driver may select a driving mode, a driving style model, and the like of the intelligent vehicle by using the interactive device 117. In a possible implementation, the interactive device 117 may be integrated with the display 109.

The processor 103 may be any conventional processor, including a reduced instruction set computer (reduced instruction set computer, RISC) processor, a complex instruction set computer (complex instruction set computer, CISC) processor, or a combination thereof. Optionally, the processor may be a dedicated apparatus such as an application-specific integrated circuit (application specific integrated circuit, ASIC). Optionally, the processor 103 may be a neural network processor or a combination of the neural network processor and the foregoing conventional processor. Optionally, the processor 103 may include a main controller (which may also be referred to as a central controller) and an advanced driver assistance system controller. The main controller is a control center of the computer system. The advanced driver assistance system controller is configured to control an automated driving route, an assisted automated driving route, or the like.

The display 109 may be any one or more display devices installed in the vehicle. For example, the display 109 may include: a head up display (head up display, HUD), a dashboard, and a display dedicated for a passenger.

The in-vehicle processing system 101 may communicate with the server (deploying server) 149 through the network interface 129. The network interface 129 may be a hardware network interface, for example, a network interface card. A network 127 may be an external network such as the internet, or an internal network such as the Ethernet or a virtual private network (virtual private network, VPN). Optionally, the network 127 may alternatively be a wireless network, for example, a Wi-Fi network or a cellular network.

The memory interface 131 is coupled to the system bus 105. The memory interface is connected to the memory.

The system memory 135 is coupled to the system bus 105. Data running in the system memory 135 may include an operating system 137 and an application 143.

The operating system 137 includes a shell (shell) 139 and a kernel (kernel) 141. The shell 139 is an interface between a user and the kernel of the operating system. The shell is an outermost layer of the operating system. The shell manages interaction between the user and the operating system: waiting for an input of the user, explaining the input of the user to the operating system, and processing various output results of the operating system.

The kernel 141 includes parts of the operating system that are used for managing a memory, a file, a peripheral device, and a system resource, and directly interacts with hardware. The kernel of the operating system usually runs a process, provides inter-process communication, and provides functions such as CPU time slice management, interrupt, memory management, and IO management.

An intelligent driving system 143 includes a program related to controlling automated driving of a vehicle, for example, a program for processing environment information around the vehicle that is obtained by a vehicle-mounted device, a program for implementing a method for determining a drivable path provided in embodiments of this application, a program for controlling a route or a speed of an automated vehicle, or a program for controlling interaction between the automated vehicle and another automated vehicle on a road. The intelligent driving system 143 may alternatively exist in a system of the server 149. In an embodiment, when the intelligent driving system 143 needs to be executed, the in-vehicle processing system 101 may download an installation program of the intelligent driving system 143 from the server 149.

The sensing device 153 is related to the in-vehicle processing system 101. The sensing device 153 is configured to detect an environment around the vehicle. For example, the sensing device 153 may detect an animal, another vehicle, an obstacle, a sidewalk, a lane line, and the like around the vehicle. Further, the sensing device 153 may detect an environment around the object such as the animal, the vehicle, the obstacle, and the sidewalk, for example, a weather condition, and brightness of an ambient environment. The sensing device may include a camera, an infrared sensor, a chemical detector, a microphone, and the like. The sensing device 153 may further include a speed sensor, configured to measure speed information (such as a speed and an acceleration) of the vehicle (that is, the vehicle in which the in-vehicle computing system shown in FIG. 1 is located), and an angle sensor, configured to measure direction information of the vehicle, a relative angle between the vehicle and an object around the vehicle, and the like. The sensing device 153 may further include a laser radar sensor, configured to detect a reflected signal of a laser signal sent by the laser radar, to obtain a laser point cloud. The laser radar may be installed at top of the vehicle to send a laser signal.

The positioning device 123 includes a device or a subsystem configured to determine a location of the vehicle, such as a global positioning system (global positioning system, GPS) or an inertial navigation system (inertial navigation system, INS).

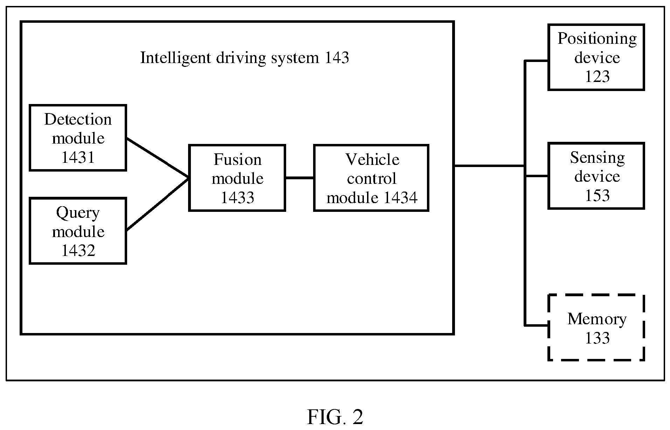

In some embodiments of this application, the processor 103 executes various instructions to implement various functions of the intelligent driving system 143. Specifically, as shown in FIG. 2, an embodiment of this application provides an example of a structure of the intelligent driving system 143. The intelligent driving system 143 may include a detection module 1431, a query module 1432, a fusion module 1433, and a vehicle control module 1434.

The detection module 1431 is configured to: obtain environment information around a location of a vehicle, and determine a current drivable area. Specifically, the detection module 1431 determines the ambient environment information by using the positioning device 123 and the sensing device 153, including information about an obstacle (for example, a location and a size of the obstacle, including but not limited to a location, a size, a posture, and a speed of a physical object such as a person, a vehicle, or a roadblock) in a surrounding area of the vehicle, lane information, and the like. The detection module 1431 determines the current drivable area based on the environment information around.

The query module 1432 is configured to query a historical drivable area library based on the location of the vehicle, to obtain information about a corresponding historical drivable area. The historical drivable area library records a historical drivable path recorded when the vehicle passes through the location of the vehicle.

The fusion module 1433 is configured to superimpose the current drivable area and the historical drivable area, to obtain a drivable area at this time.

The fusion module 1433 is specifically configured to: determine whether the drivable area obtained through superposition includes a drivable lane that meets a first length, and if the drivable area obtained through superposition includes the drivable lane that meets the first length, use the drivable lane that meets the first length as the drivable area at this time.

Further, the fusion module 1433 notifies the vehicle control module 1434 to control a traveling path of the vehicle based on the output drivable area at this time.

The memory 133 is configured to store the information about the historical drivable area and a map (for example, a high-definition map), and update stored content. The detection module 1431 obtains, from the memory 133 based on the current location of the vehicle, information about a map in a specific area around the vehicle. The information about the map includes road markings in the specific area around the vehicle, for example, a road line, a lane line, and a stop line. The detection module 1433 performs information interaction with the sensing device 153, obtains an obstacle status, a road identifier, and the like in an area around the vehicle, and performs a registration operation.

The memory 133 may be a memory specially configured to store a map, or may be a general-purpose memory. This is not limited in this embodiment of this application.

All the foregoing modules (the detection module 1431, the query module 1432, the fusion module 1433, and the vehicle control module 1434) may be implemented by using software and/or hardware. In addition, any one or more of the modules may be disposed independently, or may be integrated together. This is not specifically limited in this embodiment of this application. In an example, any one or more of these modules may be used as a logical function module in the main controller or the ADAS controller.

The in-vehicle computing system may be all located on the vehicle, or some processing logic is located in a cloud network connected to the vehicle by using a network. For example, the in-vehicle processing system 101 may be located away from the automated vehicle, and may wirelessly communicate with the automated vehicle. In other aspects, some of the processes described in this specification are performed by a processor disposed in the automated vehicle, and others are performed by a remote processor. For example, all or some functions of the query module 1432 are implemented on a server deployed on a cloud.

It should be noted that the computer system shown in FIG. 1 is merely an example, and does not constitute a limitation on a computer system to which embodiments of this application are applicable.

The drivable area in this embodiment of this application may include a road surface area on which an intelligent vehicle can drive, such as a structured road surface, a semi-structured road surface, or an unstructured road surface. The structured road surface generally has a single structure with a road edge, such as an urban main road, a highway, a national road, and a provincial road. A structure layer of the road surface complies with a specific standard, and is unified in color and material. The semi-structured road surface is a common non-standard road surface, and varies significantly in color and material, for example, a parking lot, a square, and some branch roads. The unstructured road surface has no structural layer and is a natural road scenario. To implement route planning for automated driving, drivable areas may be detected. In an automated driving system based on computer vision, a drivable area is generally detected based on an image segmentation technology. For urban vehicles, structured and unstructured road surfaces may be detected and recognized for automated driving. For unmanned vehicles in the field, the unstructured road surface needs to be detected.

There are many different detection methods for different environments. A basic method is to obtain basic structural features of a road surface based on a road surface color, a road model, a road surface texture feature, and the like, and further obtain potential information such as a road edge and a basic direction (go straight, turn left, turn right, turn sharp to the left, and turn sharp to the right) of a road by using these features. These features may be extracted by using a conventional segmentation and extraction method or a machine learning method.

The drivable area is mainly detected to provide path planning assistance for automated driving. The entire road surface may be detected, or only some road information, for example, a road direction, a road midpoint, or a lane line in a specific area ahead, may be extracted provided that road path planning and obstacle avoidance can be implemented with reference to a high-definition map, and a drivable area in the entire road surface does not need to be extracted. For a semi-structured or unstructured road surface without a clear road marking, there is no lane division. The intelligent driving system 143 may further perform an analysis function, perform lane division on a road surface within a detection range, and apply, to a subsequent processing process, a detection result of a drivable area obtained through lane division.

For a repeated road, especially a commuter route, in an automated driving scenario, in the conventional technology, a road condition in a historical area cannot be predicted after a plurality of times of passing, like a human driver. For example, a road section in which some lanes have pits, a road section in which a complex intersection is located, and a road section in which there are a large quantity of roadside parking cannot be predicted. However, the human driver may predetermine based on experience, to avoid in advance or adopt a more reasonable driving policy. However, in a method for determining a drivable area based on a network model, the network model is generally trained by using a large amount of driving data in a training phase. After the network model is fixed, the method for determining the drivable area is not gradually optimized with an increase of driving repetition times. In addition, for repeated route driving in conventional driving, previous historical driving experience cannot be referred to in a timely manner by using the network model.

Embodiments of this application provide a method for determining a drivable area based on experience, to store a previous drivable path, and continuously optimize information about a historical drivable area by using an algorithm. When the drivable area is determined in a driving process, a current drivable area and the information about the historical drivable area are combined and superposed, to obtain an optimized drivable area at this time.

In a possible implementation, in this embodiment of this application, the information about the historical drivable area may be stored in a historical drivable area library in the form of a binary map, so that the information about the historical drivable area can be persistently stored without occupying a large amount of space. The stored information about the historical drivable area may be continuously optimized with driving repetition times. In the foregoing manner, in this embodiment of this application, determining for the drivable area has a self-learning capability.

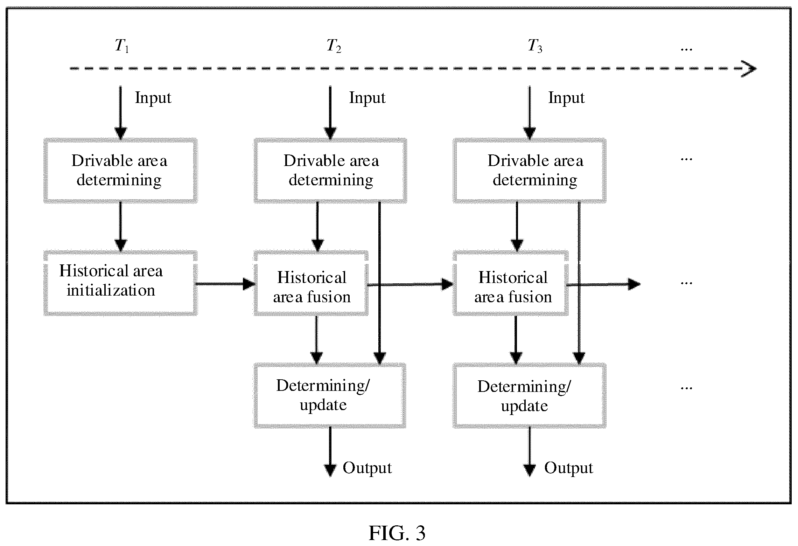

FIG. 3 is a schematic diagram of a time sequence for determining a drivable area according to an embodiment of this application. $T_1$, $T_2$, $T_3$, and the like respectively indicate that a vehicle passes through a same determining location for a first time, a second time, a third time, and the like. When an intelligent vehicle passes through the determining location for the first time at T1, an in-vehicle computing system performs initialization of the drivable area in a $T_1$ phase, to obtain information about the drivable area that passes through the determining point in the T1 phase, and performs fusion determining and update on the drivable area when the intelligent vehicle passes through the drivable area in subsequent phases such as $T_2$ and $T_3$. Details are provided below.

When a vehicle is driving, a drivable area is determined at a determining location that the vehicle passes through. If record information about a historical drivable area related to a to-be-determined location is not matched in a historical drivable area library, processing is performed at the determining location based on an operation in the $T_1$ phase.

For the $T_1$ phase, a detection module is first invoked to detect the drivable area, to output information about the drivable area. The information about the drivable area output in the $T_1$ phase is stored, including description information about the drivable area, GPS data, a road feature point, and the like. The information about the drivable area output in the T1 phase is used as initialized information about the historical drivable area, and is recorded in the historical area library. In a specific implementation, each recorded drivable area is stored by using GPS data as a reference, and a unique tag number may be allocated to identify each record, so as to facilitate query.

When the vehicle passes through the determining location for the second time (in the T2 phase), the information about the historical drivable area is read from the historical area library for an operation in the $T_2$ phase. Specifically, the GPS data of the determining location may be matched with the GPS data in the historical database. After the matching succeeds, a tag number of the historical drivable area is output, and the information about the historical drivable area in the corresponding tag number is invoked for fusion use.

In the $T_2$ phase, the detection module detects a current drivable area at the determining location, and for the current drivable area detected and output in the $T_2$ phase, invokes a fusion method to fuse the current drivable area and the historical drivable area, to obtain a drivable area at this time based on the method for determining the drivable area.

The drivable area that is output this time is used as historical information, and the historical area information is updated, where updated content is information about the drivable area in a corresponding tag number.

When the vehicle passes through the determining location (such as in $T_3$ and $T_4$) again, an operation in the $T_2$ phase is repeated, so that information about an optimized drivable area is output.

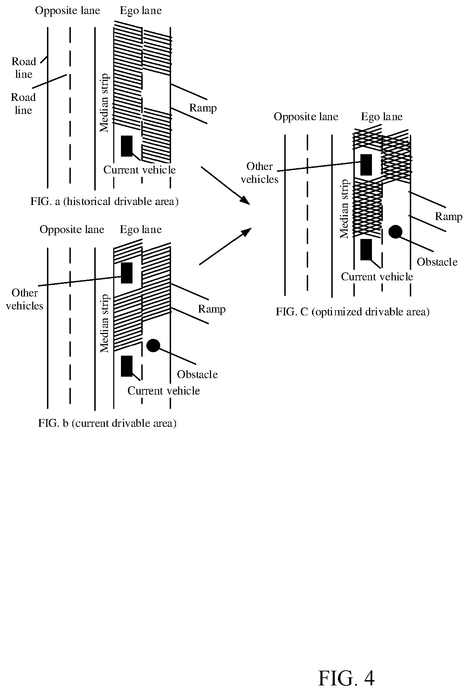

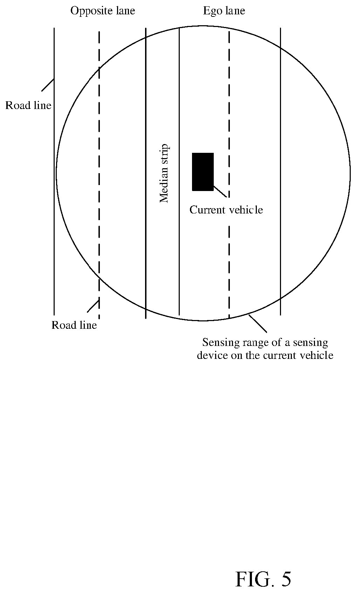

FIG. 4 is a schematic diagram for fusing a drivable area according to an embodiment of this application. FIG. a marks a drivable area recorded in a historical drivable area library when a vehicle is at a current determining location, and the drivable area is represented by a slash. FIG. b shows a current drivable area detected by a detection module, and is represented by a reverse slash. FIG. c shows an optimized drivable area that is output after determining is performed with reference to a historical drivable area. For the optimized drivable area, a minimum drivable area including an optimal path may be preferably output with reference to historical experience information. For example, a non-drivable area of a right lane in FIG. a may be a ramp-in area in which there is possibly an obstacle, and there may be a deceleration vehicle that is about to drive into a ramp. A middle lane is a straight lane that is possibly an unblocked lane. FIG. 5 is a schematic diagram of a sensing range of a sensing device according to an embodiment of this application. In this embodiment of this application, a drivable path is planned within the sensing range.

An embodiment of this application provides a method for storing information about a historical drivable area. The information about the historical drivable area may be stored in a form of a low-resolution binary image (for example, 128* 128). For example, a granularity of the recorded information about the historical drivable area may be one meter, that is, one piece of data is stored every meter when a vehicle moves. The stored data includes three parts: drivable area information, GPS data, and a road feature point. The drivable area is stored in the form of a binary image. The road feature point is scale-invariant feature transform (Scale-invariant feature transform, SIFT) point data obtained after a camera removes a moving object based on target detection. The road feature point may be stored as a text. The GPS data is stored in a list, and has a unique tag number to associate the GPS data with the binary image and the feature point data.

When data of the historical drivable area is queried, a corresponding tag number may be queried by using the GPS data, and a corresponding binary map and feature point data are obtained based on the tag number. For example, a system may map areas whose GPS data difference does not exceed one meter to a same tag number.

For each location (that is, each area distinguished by granularity), k pieces of information about the historical drivable area are stored, and are denoted as $S_{n-1}$, $S_{n-2}$, ... , $S_{n-k}$, and respectively represent drivable area information output when the vehicle passes through the area for an $(n-1)^{th}$ time, an $(n-2)^{th}$ time, ..., and an $(n-k)^{th}$ time. For example, a value of k may be 10.

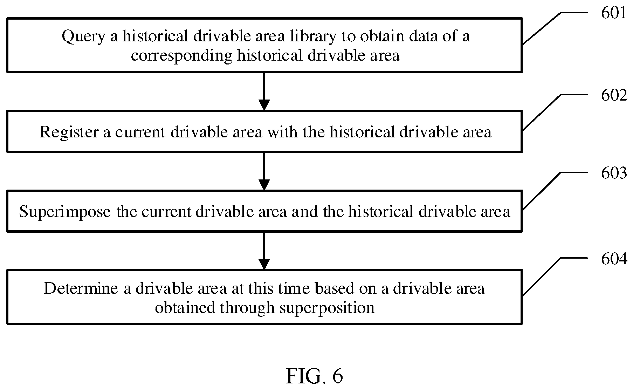

As shown in FIG. 6, an embodiment of this application provides a schematic flowchart of a fusion determining method for a drivable area. The method includes the following steps.

Step 601: Query a historical drivable area library based on location positioning information (GPS), to obtain information about a corresponding historical drivable area.

Step 602: Register a current drivable area and the historical drivable area, that is, align the historical drivable area with the current drivable area based on feature points such as a lane line.

In a possible implementation, in this embodiment of this application, a registration operation may be completed with reference to an SIFT feature point by using an existing universal feature extraction and registration method of computer vision. SIFT, namely scale-invariant feature transform (Scale-invariant feature transform, SIFT) is a description used in the image processing field. This description, as a local feature description, has scale invariance and can detect key points in an image.

SIFT feature detection includes the following steps.

Scale space extremum detection: Search for image positions on all scales and identify potential points of interest in scale and rotation invariant by using the Gaussian differential function.

Key point positioning: A location and a scale are determined by using a fine fitting model for each candidate location. Selection of key points depends on their stability.

Direction determining: One or more directions are allocated to each key point location based on a local gradient direction of an image. All subsequent operations on image data are transformed with respect to directions, scales, and locations of the key points, to provide invariance to these transformations.

Key point description: In a neighborhood around each key point, a local gradient of an image is measured at a selected scale. These gradients are transformed into a representation that allows for larger local shape deformations and light changes. Stored road feature information is SIFT feature point information of an area.

Registration: In a registration phase, SIFT feature extraction is also performed in a current area. After SIFT feature vectors of two images are generated, a Euclidean distance of key point feature vectors can be used as similarity determining measurement of key points in the two images. A key point of the current image is obtained, and two key points that are closest to each other in a historical image are found by traversing. In the two key points, if a closest distance divided by a second closest distance is less than a threshold, the two key points are determined as a pair of matching points. Based on a matching result of the foregoing step, 30 pairs of matching points with highest matching values are selected as reference point pairs, a scale and a direction parameter are calculated by using the remaining matching point pairs, and then a translation, rotation, and scaling transformation is performed based on parameters, to obtain a registered historical drivable area.

Step 603: Superimpose the current drivable area and the historical drivable area.

Step 604: Determine a drivable area at this time based on a drivable area obtained through superposition.

$S_{com}$ is obtained through superposition, and is used as an output with a highest priority. If there is no complete lane in $S_{com}$, $S_{com}^{n-1}$ is used as the output.

There are two manners of obtaining lane line information based on difference of application systems. One manner is to directly obtain lane line information from a high-definition map based on a GPS positioning result, which is limited by GPS positioning precision and whether a high-definition map is available. The other manner is to directly extract lane line information from an image of a current area by using a computer vision method. In the computer vision method, the lane line information may be obtained by using a processing method of a conventional image processing manner (such as edge information extraction) or deep learning (such as LaneNet). In this embodiment of this application, a source of the lane line information is not limited, and may be from a detection module in a system or another existing manner.

To determine whether there is a complete drivable lane, a detection result of the detection module in the in-vehicle processing system is further required. The detection result is compared with coordinates of the lane line information, to obtain whether there is a complete drivable lane in the drivable area. For example, the complete lane may be that, by using a vehicle as a reference, there is no obstacle target in a lane in a sensing range.

If there is no complete lane in $S_{n-1}$, $S_n$ is used as an output, that is, an output result of the detection module in the drivable area may be used as the output.

A method for generating $S_{com}$ includes the following steps.

Accumulate $S_{n-1}$, $S_{n-2}$, ..., and $S_{n-k}$, and output a binary matrix S based on a threshold (for example, k/2).

Perform an and (and) operation on S and the current drivable area $S_n$, to obtain $S_{com}$.

A generation method of $S_{com}^{n-1}$ is as follows: Perform an and (and) operation on $S_{n-1}$ and the current drivable area $S_n$ to obtain $S_{com}^{n-1}$.

$S_{com}$, $S_{com}^{n-1}$ and $S_n$ are described in the following table:

| Drivable area | Description | Priority |
|---|---|---|
| $S_{com}$ | Overlapped part between a current drivable area and a historical drivable area | 1 |
| $S_{com}^{n-1}$ | Overlapped part between a current drivable area and a latest historical drivable area | 2 |
| $S_n$ | Current drivable area | 3 |

This embodiment further provides a method for updating information about a historical drivable area. If a current drivable area $S_n$ includes a complete lane, the information about the historical drivable area is updated, and $S_n$ is reserved as historical area information, and the historical area information previous to $S_{n-k}$ is discarded (forgotten); or if the current drivable area $S_n$ does not include the complete lane, the information about the historical drivable area is not updated (a bad value is discarded).

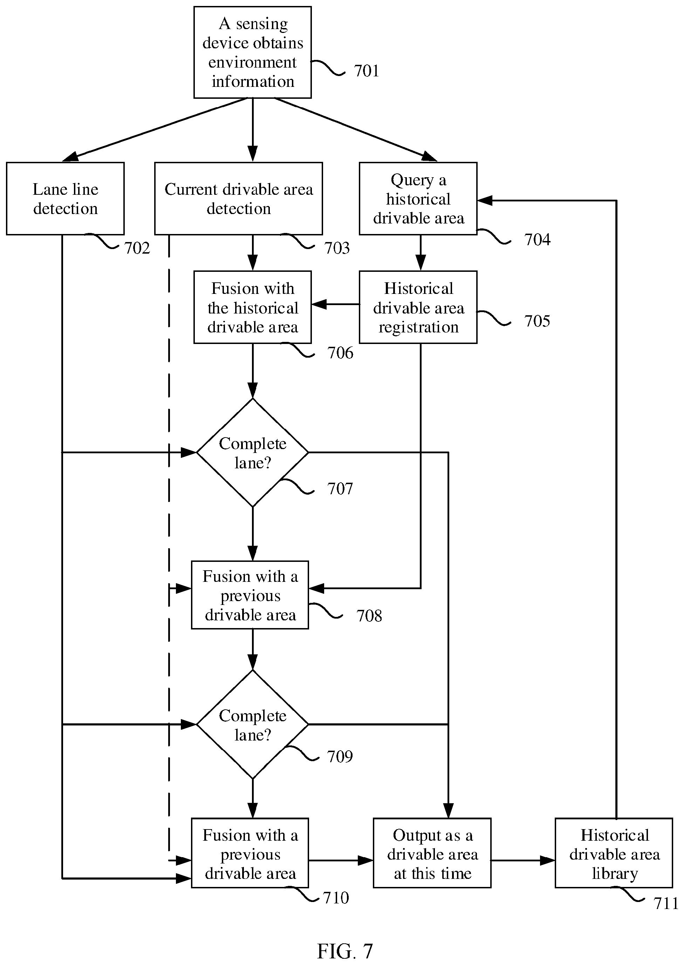

FIG. 7 is a schematic flowchart of a method for determining a drivable area according to an embodiment of this application. The method includes the following steps.

Step 701: A sensing device obtains environment information around a vehicle.

Step 702: A detection module obtains the environment information around the vehicle that is input by the sensing device, to obtain lane line information.

Step 703: The detection module obtains positioning information, and obtains a current drivable area based on the environment information.

Step 704: A query module queries information about a historical drivable area in a historical drivable area library with reference to the positioning information.

Step 705: A fusion module performs registration on the historical drivable area and the current drivable area with reference to feature point matching (to align lane lines and the like).

Step 706: Perform $S_{com}$ area fusion on the information about the current drivable area and the information about the registered historical drivable area.

Step 707: With reference to a lane line detection result, if a complete lane is included in $S_{com}$, output the complete lane as the determined drivable area.

Step 708: If a complete lane is not included in $S_{com}$, perform $S_{com}^{n-1}$ region fusion.

Step 709: With reference to a lane line detection result, if a complete lane is included in $S_{com}^{n-1}$, output the complete lane as the determined drivable area.

Step 710: If the complete lane is not included in $S_{com}^{n-1}$, directly output $S_n$ as the determined historical drivable area.

Step 711: After the determined historical drivable area is output, update a historical area according to the foregoing method in this embodiment of this application, and use an updated historical area as a historical drivable area library in subsequent determining.

Repeat the foregoing process, so that determining the drivable area is continuously self-updated and optimized with an increase of repetition times.

A method for defining and storing a historical drivable area is used to represent and persist historical experience information of a drivable area in automated driving. The foregoing fusion determining method is used to fuse the current drivable area and the historical drivable area, and output a drivable area in which an optimal route is located. A method for updating a historical drivable area is used to update the historical drivable area, and a forgetting rule and a discarding rule may be set, so that an algorithm can forget information that is long ago or discard outdated data after a drivable area is added, to update a road condition change in a timely manner, and avoid interference from an individual abnormal value.

Embodiments of this application provide a method and a procedure for determining a drivable area based on historical information, and combine lane line detection, to output an optimal drivable area by fusing stored information about a historical drivable area and a current drivable area.

Embodiments of this application provide a method for storing a historical drivable area and an update procedure, so that the historical drivable area is converted into a binary picture, and the binary picture is stored based on current positioning information. This reduces space required for storage. Embodiments of this application provide a self-learning and updating method for a historical drivable area. Coding and storing a historically determined drivable area are combined with instant determining of a current drivable area, so that selection of the drivable area can be gradually optimized with an increase of a historical record.

In a specific implementation, information about the historical drivable area may be stored in another manner, for example, a numerical matrix, or map information. A manner of performing fusion determining on the historical drivable area and the current drivable area may be another manner, for example, adding or performing weighted multiplication on the historical area and the current area. A method for updating the historical drivable area may be another manner. For example, the historical drivable area is updated by using the drivable area obtained through fusion determining.

According to embodiments of this application, a drivable area in which an optimal route is located is preferably output during determining of a drivable area, so that accuracy of determining the drivable area is improved, an exploration process of an automated driving algorithm is reduced, and automated driving experience is improved. In addition, an algorithm for determining the drivable area has a self-learning capability, to implement automatic optimization based on a historical record.

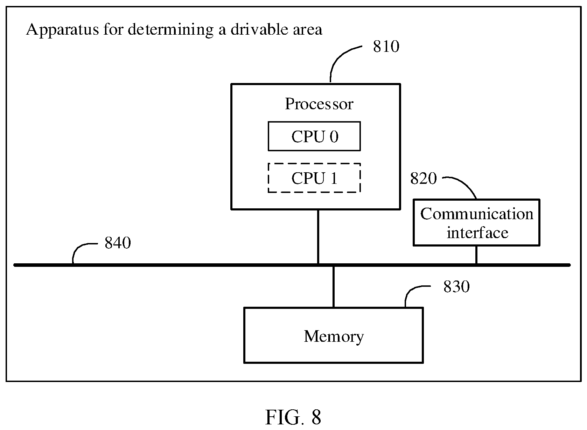

FIG. 8 is a schematic diagram of a structure of an apparatus for determining a drivable area according to an embodiment of this application. The apparatus 800 for determining the drivable area may be a computing device, or may be a module in an intelligent driving system or a mobile data center MDC, and is configured to implement functions described in the foregoing procedures. The apparatus 800 for determining the drivable area includes at least a processor 810, a communication interface 820, and a memory 830. The processor 810, the communication interface 820, and the memory 830 are connected to each other by using a bus 840.

For specific implementation of the operations performed by the processor 810, refer to specific operations such as obtaining environment information and fusing a drivable area in the foregoing method embodiments. The processor 810 may have a plurality of specific implementation forms. The processor 810 performs a related operation based on a program unit stored in the memory. The program unit may be instructions, or referred to as a computer program. The processor 810 may be a central processing unit (central processing unit, CPU) or a graphics processing unit (graphics processing unit, GPU). The processor 810 may alternatively be a single-core processor or a multi-core processor.

The processor 810 may be a combination of a CPU and a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The processor 810 may alternatively be implemented independently by using a logic device with built-in processing logic, for example, an FPGA or a digital signal processor (digital signal processor, DSP).

The communication interface 820 may be a wired interface or a wireless interface, and is configured to communicate with another module or device. The wired interface may be an Ethernet interface, a controller area network (controller area network, CAN) interface, a local interconnect network (local interconnect network, LIN) interface, or a FlexRay interface. The wireless interface may be a cellular network interface, a wireless local area network interface, or the like. For example, the communication interface 820 in this embodiment of this application may be specifically configured to receive environment data collected by the sensing device 153.

The bus 840 may be a CAN bus or another internal bus that implements interconnection between systems or devices in a vehicle. The bus 840 may be classified into an address bus, a data bus, a control bus, or the like. For ease of representation, only one thick line is for representing the bus in FIG. 8, but this does not mean that there is only one bus or only one type of bus.

Optionally, the apparatus for determining the drivable area may further include a memory 830. A storage medium of the memory 830 may be a volatile memory and a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). The memory 530 may alternatively be configured to store program code and data, so that the processor 810 invokes the program code stored in the memory 830 to implement functions of the intelligent driving system in the foregoing embodiments. In addition, the apparatus 800 for determining the drivable area may include more or fewer components than those shown in FIG. 8, or may have different component configuration manners.

In the foregoing embodiments, the description of each embodiment has respective focuses. For a part that is not described in detail in an embodiment, refer to related descriptions in other embodiments.

All or some of the foregoing embodiments may be implemented by software, hardware, firmware, or any combination thereof. When software is used to implement embodiments, the foregoing embodiments may be implemented completely or partially in a form of a computer program product. The computer program product includes one or more computer instructions. When the computer program instructions are loaded or executed on a computer, all or some of the processes or the functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid state drive (solid state drive, SSD).

Steps in the methods in embodiments of this application may be sequentially scheduled, combined, or deleted according to an actual requirement. Modules in the apparatus in embodiments of this application may be divided, combined, or deleted according to an actual requirement.

**Claims**

1.  A method for determining a drivable area applied to intelligent driving to determine a drivable path for a vehicle, comprising:

    obtaining, by an intelligent driving system (143), environment information around a location of a vehicle, and determining a current drivable area based on the environment information;
    querying (601), by the intelligent driving system (143), a historical drivable area library based on the location of the vehicle, to obtain information about a corresponding historical drivable area; and
    superimposing (603), by the intelligent driving system (143), the current drivable area and the historical drivable area, to obtain a drivable area at this time.

2.  The method according to claim 1, wherein the superimposing, by the intelligent driving system (143), the current drivable area and the historical drivable area, to obtain a drivable area at this time comprises:
    determining, by the intelligent driving system (143), whether the drivable area obtained through superposition comprises a drivable lane that meets a first length, and if the drivable area obtained through superposition comprises the drivable lane that meets the first length, using the drivable lane that meets the first length as the drivable area at this time.

3.  The method according to claim 2, wherein
    when the drivable area obtained through superposition does not comprise the drivable lane that meets the first length, using the current drivable area as the drivable area at this time.

4.  The method according to claim 2 or 3, wherein

    when a drivable area obtained by superimposing the current drivable area and previous k historical drivable areas comprises the drivable lane that meets the first length, using the drivable area obtained through superimposition as the drivable area at this time; or
    when a drivable area obtained by superimposing the current drivable area and previous k historical drivable area does not comprise the drivable lane that meets the first length, determining whether a drivable area obtained by superimposing the current drivable area and a previous historical drivable area comprises the drivable lane that meets the first length; and if the drivable area obtained by superimposing the current drivable area and the previous historical drivable area comprises the drivable lane that meets the first length, using the drivable area obtained by superimposing the current drivable area and the previous historical drivable area as the drivable area at this time, wherein k is a positive integer greater than or equal to 2.

5.  The method according to any one of claims 2 to 4, further comprising:
    when the current drivable area comprises the drivable lane that meets the first length, updating the current drivable area to the historical drivable area library.

**6.** The method according to any one of claims 2 to 4, wherein
the first length indicates a sensing range of the intelligent driving system (143), and the drivable lane that meets the first length indicates that a lane in the sensing range of the intelligent driving system (143) is in a drivable area.

**7.** The method according to any one of claims 1 to 6, wherein the information about the historical drivable area comprises a historical drivable area record, positioning data, and a road feature point.

**8.** The method according to any one of claims 1 to 7, wherein the intelligent driving system (143) stores the information about the historical drivable area by using a second length as a granularity, wherein when the second length is less than a sensing range radius of the intelligent driving system (143), the intelligent driving system (143) obtains a historical drivable area whose length is greater than or equal to the sensing range in the vehicle moving direction at the location of the vehicle.

**9.** The method according to any one of claims 1 to 8, wherein after the querying a historical drivable area library to obtain information about a corresponding historical drivable area, the method further comprises:
registering, by the intelligent driving system (143), the current drivable area and the historical drivable area based on a road feature point of the location of the vehicle, so that the road feature point of the current drivable area overlaps, on a map, the road feature point comprised in the information about the historical drivable area that is obtained by querying.

**10.** The method according to any one of claims 1 to 9, wherein the historical drivable area obtained by querying is greater than or equal to the sensing range of the intelligent driving system (143).

**11.** An intelligent driving system (143) configured to determine a drivable path for a vehicle, comprising:

a detection module (1431), configured to: obtain environment information around a location of a vehicle, and determine a current drivable area based on the environment information.
a query module (1432), configured to query a historical drivable area library based on the location of the vehicle, to obtain information about a corresponding historical drivable area; and
a fusion module (1433), configured to superimpose the current drivable area and the historical drivable area, to obtain a drivable area at this time.

**12.** The system (143) according to claim 11, wherein
the fusion module (1433) is specifically configured to: determine whether the drivable area obtained through superposition comprises a drivable lane that meets a first length, and if the drivable area obtained through superposition comprises the drivable lane that meets the first length, use the drivable lane that meets the first length as the drivable area at this time.

**13.** The system (143) according to claim 12, wherein
the fusion module (1433) is specifically configured to: when the drivable area obtained through superposition does not comprise the drivable lane that meets the first length, use the current drivable area as the drivable area at this time.

**14.** The system (143) according to claim 12 or 13, wherein

the fusion module (1433) is specifically configured to: when a drivable area obtained by superimposing the current drivable area and previous k historical drivable areas comprises the drivable lane that meets the first length, use the drivable area obtained through superimposition as the drivable area at this time; or
the fusion module (1433) is specifically configured to: when a drivable area obtained by superimposing the current drivable area and previous k historical drivable area does not comprise the drivable lane that meets the first length, determine whether a drivable area obtained by superimposing the current drivable area and a previous historical drivable area comprises the drivable lane that meets the first length; and if the drivable area obtained by superimposing the current drivable area and the previous historical drivable area comprises the drivable lane that meets the first length, use the drivable area obtained by superimposing the current drivable area and the previous historical drivable area as the drivable area at this time, wherein k is a positive integer greater than or equal to 2.

**15.** A vehicle, comprising a processor (810), a memory (830), and a sensing device (153), wherein

the memory (830) is configured to store a historical drivable area library;
the sensing device (153) is configured to obtain environment information around a location of the vehicle; and

the processor (153) is configured to execute instructions to implement the method according to any one of claims 1 to 10.

**Patentansprüche**

1. Verfahren zum Bestimmen eines fahrbaren Bereichs, das auf intelligentes Fahren angewendet wird, um einen fahrbaren Weg für ein Fahrzeug zu bestimmen, umfassend:

   Erlangen, durch ein intelligentes Fahrsystem (143), von Umgebungsinformationen um einen Standort eines Fahrzeugs herum und Bestimmen eines aktuell fahrbaren Bereichs basierend auf den Umgebungsinformationen;
   Abfragen (601), durch das intelligente Fahrsystem (143), einer historischen Bibliothek für fahrbare Bereiche basierend auf dem Standort des Fahrzeugs, um Informationen über einen entsprechenden historischen fahrbaren Bereich zu erlangen; und
   Überlagern (603), durch das intelligente Fahrsystem (143), des aktuellen fahrbaren Bereichs und des historischen fahrbaren Bereichs, um einen fahrbaren Bereich zu diesem Zeitpunkt zu erlangen.

2. Verfahren nach Anspruch 1, wobei das Überlagern, durch das intelligente Fahrsystem (143), des aktuellen fahrbaren Bereichs und des historischen fahrbaren Bereichs, um einen fahrbaren Bereich zu diesem Zeitpunkt zu erlangen, Folgendes umfasst:
   Bestimmen, durch das intelligente Fahrsystem (143), ob der durch Überlagerung erlangte fahrbare Bereich eine fahrbare Spur, die eine erste Länge erfüllt, umfasst und, wenn der durch Überlagerung erlangte fahrbare Bereich die fahrbare Spur, welche die erste Länge erfüllt, umfasst, Verwenden der fahrbaren Spur, welche die erste Länge erfüllt, als den fahrbaren Bereich zu diesem Zeitpunkt.

3. Verfahren nach Anspruch 2, wobei
   wenn der durch Überlagerung erlangte fahrbare Bereich die fahrbare Spur, welche die erste Länge erfüllt, nicht umfasst, Verwenden des aktuellen fahrbaren Bereichs als den fahrbaren Bereich zu diesem Zeitpunkt.

4. Verfahren nach Anspruch 2 oder 3, wobei

   wenn ein fahrbarer Bereich, der durch Überlagern des aktuellen fahrbaren Bereichs und vorheriger k historischer fahrbarer Bereiche erlangt wird, die fahrbare Spur, welche die erste Länge erfüllt, umfasst, Verwenden des durch Überlagerung erlangten fahrbaren Bereichs als den fahrbaren Bereich zu diesem Zeitpunkt; oder
   wenn ein fahrbarer Bereich, der durch Überlagern des aktuellen fahrbaren Bereichs und vorheriger k historischer fahrbarer Bereiche erlangt wird, die fahrbare Spur, welche die erste Länge erfüllt, nicht umfasst, Bestimmen, ob ein fahrbarer Bereich, der durch Überlagern des aktuellen fahrbaren Bereichs und eines vorherigen historischen fahrbaren Bereichs erlangt wird, die fahrbare Spur, welche die erste Länge erfüllt, umfasst; und, wenn der fahrbare Bereich, der durch Überlagern des aktuellen fahrbaren Bereichs und des vorherigen historischen fahrbaren Bereichs erlangt wird, die fahrbare Spur, welche die erste Länge erfüllt, umfasst, Verwenden des fahrbaren Bereichs, der durch Überlagern des aktuellen fahrbaren Bereichs und des vorherigen historischen fahrbaren Bereichs erlangt wird, als den fahrbaren Bereich zu diesem Zeitpunkt, wobei k eine positive ganze Zahl größer als oder gleich 2 ist.

5. Verfahren nach einem der Ansprüche 2 bis 4, ferner umfassend:
   wenn der aktuelle fahrbare Bereich die fahrbare Spur, welche die erste Länge erfüllt, umfasst, Aktualisieren der historischen Bibliothek für fahrbare Bereiche mit dem aktuellen fahrbaren Bereich.

6. Verfahren nach einem der Ansprüche 2 bis 4, wobei die erste Länge eine Erfassungsreichweite des intelligenten Fahrsystems (143) angibt und die fahrbare Spur, welche die erste Länge erfüllt, angibt, dass eine Spur in der Erfassungsreichweite des intelligenten Fahrsystems (143) in einem fahrbaren Bereich liegt.

7. Verfahren nach einem der Ansprüche 1 bis 6, wobei die Informationen über den historischen fahrbaren Bereich eine Aufzeichnung des historischen fahrbaren Bereichs, Positionsdaten und einen Straßenmerkmalpunkt umfassen.

8. Verfahren nach einem der Ansprüche 1 bis 7, wobei das intelligente Fahrsystem (143) die Informationen über den historischen fahrbaren Bereich unter Verwendung einer zweiten Länge als Granularität speichert, wobei, wenn die zweite Länge kleiner als ein Erfassungsreichweitenradius des intelligenten Fahrsystems (143) ist, das intelligente Fahrsystem (143) einen historischen fahrbaren Bereich erlangt, dessen Länge größer als die oder gleich der Erfassungsreichweite in der Fahrzeugfahrrichtung an dem Standort des Fahrzeugs ist.

9. Verfahren nach einem der Ansprüche 1 bis 8, wobei das Verfahren nach dem Abfragen einer historischen Bibliothek für fahrbare Bereiche, um Informationen über einen entsprechenden historischen fahrbaren Bereich zu erlangen, ferner Folgendes umfasst:
   Registrieren, durch das intelligente Fahrsystem (143), des aktuellen fahrbaren Bereichs und des historischen fahrbaren Bereichs basierend auf einem Straßenmerkmalpunkt des Standorts des Fahrzeugs, sodass der Straßenmerkmalpunkt des aktuellen fahrbaren Bereichs auf einer Karte den Straßenmerkmalpunkt, der in den Informationen über den historischen fahrbaren Bereich, die durch Abfragen erlangt werden, umfasst ist, überlappt.

10. Verfahren nach einem der Ansprüche 1 bis 9, wobei der historisch fahrbare Bereich, der durch Abfragen erlangt wird, größer als die oder gleich der Erfassungsreichweite des intelligenten Fahrsystems (143) ist.

11. Intelligentes Fahrsystem (143), das dazu konfiguriert ist, einen fahrbaren Weg für ein Fahrzeug zu bestimmen, umfassend:
    ein Detektionsmodul (1431), das zu Folgendem konfiguriert ist:

    Erlangen von Umgebungsinformationen um einen Standort eines Fahrzeugs herum und Bestimmen eines aktuell fahrbaren Bereichs basierend auf den Umgebungsinformationen.
    ein Abfragemodul (1432), das dazu konfiguriert ist, eine historische Bibliothek für fahrbare Bereiche basierend auf dem Standort des Fahrzeugs abzufragen, um Informationen über einen entsprechenden historischen fahrbaren Bereich zu erlangen; und
    ein Fusionsmodul (1433), das dazu konfiguriert ist, den aktuellen fahrbaren Bereich und den historischen fahrbaren Bereich zu überlagern, um einen fahrbaren Bereich zu diesem Zeitpunkt zu erlangen.

12. System (143) nach Anspruch 11, wobei
    das Fusionsmodul (1433) spezifisch zu Folgendem konfiguriert ist: Bestimmen, ob der durch Überlagerung erlangte fahrbare Bereich eine fahrbare Spur, die eine erste Länge erfüllt, umfasst und, wenn der durch Überlagerung erlangte fahrbare Bereich die fahrbare Spur, welche die erste Länge erfüllt, umfasst, Verwenden der fahrbaren Spur, welche die erste Länge erfüllt, als den fahrbaren Bereich zu diesem Zeitpunkt.

13. System (143) nach Anspruch 12, wobei
    das Fusionsmodul (1433) spezifisch zu Folgendem konfiguriert ist: wenn der durch Überlagerung erlangte fahrbare Bereich die fahrbare Spur, welche die erste Länge erfüllt, nicht umfasst, Verwenden des aktuellen fahrbaren Bereichs als den fahrbaren Bereich zu diesem Zeitpunkt.

14. System (143) nach Anspruch 12 oder 13, wobei das Fusionsmodul (1433) spezifisch zu Folgendem konfiguriert ist: wenn ein fahrbarer Bereich, der durch Überlagern des aktuellen fahrbaren Bereichs und vorheriger k historischer fahrbarer Bereiche erlangt wird, die fahrbare Spur, welche die erste Länge erfüllt, umfasst, Verwenden des durch Überlagerung erlangten fahrbaren Bereichs als den fahrbaren Bereich zu diesem Zeitpunkt; oder
    das Fusionsmodul (1433) spezifisch zu Folgendem konfiguriert ist: wenn ein fahrbarer Bereich, der durch Überlagern des aktuellen fahrbaren Bereichs und vorheriger k historischer fahrbarer Bereiche erlangt wird, die fahrbare Spur, welche die erste Länge erfüllt, nicht umfasst, Bestimmen, ob ein fahrbarer Bereich, der durch Überlagern des aktuellen fahrbaren Bereichs und eines vorherigen historischen fahrbaren Bereichs erlangt wird, die fahrbare Spur, welche die erste Länge erfüllt, umfasst; und, wenn der fahrbare Bereich, der durch Überlagern des aktuellen fahrbaren Bereichs und des vorherigen historischen fahrbaren Bereichs erlangt wird, die fahrbare Spur, welche die erste Länge erfüllt, umfasst, Verwenden des fahrbaren Bereichs, der durch Überlagern des aktuellen fahrbaren Bereichs und des vorherigen historischen fahrbaren Bereichs erlangt wird, als den fahrbaren Bereich zu diesem Zeitpunkt, wobei k eine positive ganze Zahl größer als oder gleich 2 ist.

15. Fahrzeug, umfassend einen Prozessor (810), einen Speicher (830) und eine Erfassungsvorrichtung (153), wobei

    der Speicher (830) dazu konfiguriert ist, eine Bibliothek für historische fahrbare Bereiche zu speichern;
    die Erfassungsvorrichtung (153) dazu konfiguriert ist, Umgebungsinformationen um einen Standort des Fahrzeugs herum zu erfassen; und
    der Prozessor (153) dazu konfiguriert ist, Anweisungen auszuführen, um das Verfahren nach einem der Ansprüche 1 bis 10 umzusetzen.

**Revendications**

1. Procédé de détermination d'une zone praticable appliqué à la conduite intelligente pour déterminer une trajectoire praticable pour un véhicule, comprenant :

   l'obtention, par un système de conduite intelligent (143), d'informations sur l'environnement autour d'un emplacement d'un véhicule, et la détermination d'une zone praticable actuelle sur la base des informations sur l'environnement ;
   l'interrogation (601), par le système de conduite intelligent (143), d'une bibliothèque de zones praticables historiques sur la base de l'emplacement du véhicule, pour obtenir des informations concernant une zone praticable historique correspondante ; et
   la superposition (603), par le système de conduite intelligent (143), de la zone praticable actuelle et de la zone praticable historique, pour obtenir une zone praticable à cet instant.

2. Procédé selon la revendication 1, dans lequel la superposition, par le système de conduite intelligent (143), de la zone praticable actuelle et de la zone praticable historique, pour obtenir une zone praticable à cet instant comprend :
   le fait de déterminer, par le système de conduite intelligent (143), si la zone praticable obtenue par superposition comprend une voie praticable qui satisfait à une première longueur, et si la zone praticable obtenue par superposition comprend la voie praticable qui satisfait à la première longueur, l'utilisation de la voie praticable qui satisfait à la première longueur comme zone praticable à cet instant.

3. Procédé selon la revendication 2, dans lequel
   lorsque la zone praticable obtenue par superposition ne comprend pas la voie praticable qui satisfait à la première longueur, l'utilisation de la zone praticable actuelle comme zone praticable à cet instant.

4. Procédé selon la revendication 2 ou 3, dans lequel lorsqu'une zone praticable obtenue par superposition de la zone praticable actuelle et de k zones praticables historiques précédentes comprend la voie praticable qui satisfait à la première longueur, l'utilisation de la zone praticable obtenue par superposition comme zone praticable à cet instant ; ou lorsqu'une zone praticable obtenue par superposition de la zone praticable actuelle et de k zones praticables historiques précédentes ne comprend pas la voie praticable qui satisfait à la première longueur, le fait de déterminer si une zone praticable obtenue par superposition de la zone praticable actuelle et d'une zone praticable historique précédente comprend la voie praticable qui satisfait à la première longueur ; et si la zone praticable obtenue par superposition de la zone praticable actuelle et de la zone praticable historique précédente comprend la voie praticable qui satisfait à la première longueur, l'utilisation de la zone praticable obtenue par superposition de la zone praticable actuelle et de la zone praticable historique précédente comme zone praticable à cet instant, dans lequel k est un entier positif supérieur ou égal à 2.

5. Procédé selon l'une quelconque des revendications 2 à 4, comprenant également :
   lorsque la zone praticable actuelle comprend la voie praticable qui satisfait à la première longueur, la mise à jour de la zone praticable actuelle à partir de la bibliothèque de zones praticables historiques.

6. Procédé selon l'une quelconque des revendications 2 à 4, dans lequel
   la première longueur indique une portée de détection du système de conduite intelligent (143), et la voie praticable qui satisfait à la première longueur indique quune voie dans la portée de détection du système de conduite intelligent (143) se trouve dans une zone praticable.

7. Procédé selon lune quelconque des revendications 1 à 6, dans lequel les informations concernant la zone praticable historique comprennent un enregistrement de la zone praticable historique, des données de positionnement et un point caractéristique de la route.

8. Procédé selon lune quelconque des revendications 1 à 7, dans lequel le système de conduite intelligent (143) stocke les informations concernant la zone de conduite historique à l'aide d'une seconde longueur comme granularité, dans lequel lorsque la seconde longueur est inférieure à un rayon de portée de détection du système de conduite intelligent (143), le système de conduite intelligent (143) obtient une zone de conduite historique dont la longueur est supérieure ou égale à la portée de détection dans la direction de déplacement du véhicule au niveau de l'emplacement du véhicule.

9. Procédé selon lune quelconque des revendications 1 à 8, dans lequel, après l'interrogation d'une bibliothèque de zones praticables historiques pour obtenir des informations concernant une zone praticable historique correspondante, le procédé comprend également :
l'enregistrement, par le système de conduite intelligent (143), de la zone praticable actuelle et de la zone praticable historique sur la base d'un point caractéristique de la route de l'emplacement du véhicule, de sorte que le point caractéristique de la route de la zone praticable actuelle chevauche, sur une carte, le point caractéristique de la route compris dans les informations concernant la zone praticable historique qui sont obtenues par interrogation.

10. Procédé selon lune quelconque des revendications 1 à 9, dans lequel la zone praticable historique obtenue par interrogation est supérieure ou égale à la portée de détection du système de conduite intelligent (143).

11. Système de conduite intelligent (143) configuré pour déterminer une trajectoire praticable pour un véhicule, comprenant :

un module de détection (1431), configuré pour : obtenir des informations sur l'environnement autour d'un emplacement d'un véhicule et déterminer une zone praticable actuelle sur la base des informations sur l'environnement.
un module d'interrogation (1432), configuré pour interroger une bibliothèque de zones praticables historiques sur la base de l'emplacement du véhicule, pour obtenir des informations concernant une zone praticable historique correspondante ; et
un module de fusion (1433), configuré pour superposer la zone praticable actuelle et la zone praticable historique, pour obtenir une zone praticable à cet instant.

12. Système (143) selon la revendication 11, dans lequel le module de fusion (1433) est spécifiquement configuré pour :
déterminer si la zone praticable obtenue par superposition comprend une voie praticable qui satisfait à une première longueur, et si la zone praticable obtenue par superposition comprend la voie praticable qui satisfait à la première longueur, utiliser la voie praticable qui satisfait à la première longueur comme zone praticable à cet instant.

13. Système (143) selon la revendication 12, dans lequel le module de fusion (1433) est spécifiquement configuré pour :
lorsque la zone praticable obtenue par superposition ne comprend pas la voie praticable qui satisfait à la première longueur, utiliser la zone praticable actuelle comme zone praticable à cet instant.

14. Système (143) selon la revendication 12 ou 13, dans lequel le module de fusion (1433) est spécifiquement configuré pou :

lorsqu'une zone praticable obtenue par superposition de la zone praticable actuelle et de k zones praticables historiques précédentes comprend la voie praticable qui satisfait à la première longueur, utiliser la zone praticable obtenue par superposition comme zone praticable à cet instant ; ou
le module de fusion (1433) est spécifiquement configuré pour :
lorsqu'une zone praticable obtenue par superposition de la zone praticable actuelle et de k zones praticables historiques précédentes ne comprend pas la voie praticable qui satisfait à la première longueur, déterminer si une zone praticable obtenue par superposition de la zone praticable actuelle et d'une zone praticable historique précédente comprend la voie praticable qui satisfait à la première longueur ; et si la zone praticable obtenue par superposition de la zone praticable actuelle et de la zone praticable historique précédente comprend la voie praticable qui satisfait à la première longueur, utiliser la zone praticable obtenue par superposition de la zone praticable actuelle et de la zone praticable historique précédente comme zone praticable à cet instant, dans lequel k est un entier positif supérieur ou égal à 2.

15. Véhicule, comprenant un processeur (810), une mémoire (830) et un dispositif de détection (153), dans lequel

la mémoire (830) est configurée pour stocker une bibliothèque de zones praticables historiques ;
le dispositif de détection (153) est configuré pour obtenir des informations sur l'environnement autour d'un emplacement du véhicule ; et
le processeur (153) est configuré pour exécuter des instructions pour mettre en œuvre le procédé selon l'une quelconque des revendications 1 à 10.

EP 4 184 119 B1

System memory 135

Operating system 137

Shell 139

Kernel 141

Intelligent driving system 143

103

Processor

133

Memory

131

Memory interface

System bus 105

101

111

Bus bridge

113

I/O bus

107

Adapter

115

I/O interface

125

USB interface

129

Network interface

109

HUD

Dashboard

Display

Interactive device

Multimedia device

Positioning device

117

121

123

153

Camera

Sensor

Sensing device

127

Network

149

Server

FIG. 1

Intelligent driving system 143

Detection module 1431

Query module 1432

Fusion module 1433

Vehicle control module 1434

Positioning device 123

Sensing device 153

Memory 133

FIG. 2

EP 4 184 119 B1

FIG. 3

Opposite lane    Ego lane

Road
line

Road
line

Median strip

Ramp

Current vehicle

FIG. a (historical drivable area)

Opposite lane    Ego lane

Other
vehicles

Median strip

Ramp

Obstacle

Current vehicle

FIG. b (current drivable area)

Opposite lane    Ego lane

Other
vehicles

Median strip

Ramp

Obstacle

Current vehicle

FIG. C (optimized drivable area)

FIG. 4

Opposite lane
Ego lane
Road line
Median strip
Current vehicle
Road line
Sensing range of a sensing
device on the current vehicle

FIG. 5

| Query a historical drivable area library to obtain data of a corresponding historical drivable area |
|---|

601

| Register a current drivable area with the historical drivable area |
|---|

602

| Superimpose the current drivable area and the historical drivable area |
|---|

603

| Determine a drivable area at this time based on a drivable area obtained through superposition |
|---|

604

FIG. 6

A sensing device obtains environment information — 701

Lane line detection — 702

Current drivable area detection — 703

Query a historical drivable area — 704

Fusion with the historical drivable area — 706

Historical drivable area registration — 705

Complete lane? — 707

Fusion with a previous drivable area — 708

Complete lane? — 709

Fusion with a previous drivable area — 710

Output as a drivable area at this time

Historical drivable area library — 711

FIG. 7

Apparatus for determining a drivable area

810

Processor

CPU 0

CPU 1

820

Communication interface

840

830

Memory

FIG. 8

**EP 4 184 119 B1**

**REFERENCES CITED IN THE DESCRIPTION**

**Patent documents cited in the description**

- WO 2018063245 A1
- US 2018188743 A1
- US 2016368505 A1